# EUROPÄISCHE PATENTSCHRIFT

(11) **EP 2 377 996 B1**
(45) Veröffentlichungstag und Bekanntmachung des Hinweises auf die Patenterteilung: **13.01.2016**
(21) Anmeldenummer: 10004064.1
(22) Anmeldetag: 16.04.2010
(51) Int. Cl.: E01C 19/48

(54) **Schwenkbandaufhängung**
Slewing belt suspension
Suspension de bande oscillante

(43) Veröffentlichungstag der Anmeldung: 19.10.2011
(73) Patentinhaber: Joseph Vögele AG, 67067 Ludwigshafen (DE)
(72) Erfinder: Fickeisen, Steffen, 67098 Bad Dürkeim (DE); Neumann, Joschka, 68199 Mannheim (DE)
(74) Vertreter: Grünecker Patent- und Rechtsanwälte PartG mbB

(56) Entgegenhaltungen:
- DE-A1- 2 628 325
- DE-U1- 20 101 395
- US-A1- 2006 285 923

## Beschreibung

Die vorliegende Erfindung betrifft eine Schwenkbandaufhängung gemäß des Oberbegriffs des Anspruchs 1.

Im Straßenbau werden Beschicker verwendet, um Straßenfertiger mit bituminösem Einbaugut zu versorgen. Beim Straßenbau fahren Beschickerfahrzeuge den Straßenfertigern voraus, um sicherzustellen, dass während des Asphaltierens durchgehend genügend Einbaugut dem Straßenfertiger zur Verfügung steht. Beschickerfahrzeuge umfassen einen Gutbunker, in welchem Einbaugut zwischengelagert wird, das von LKWs zur Straßenbaustelle transportiert wird. Vom Gutbunker weg führen Fördereinrichtungen, zum Beispiel Förderbänder, die das Einbaugut aus dem Gutbunker heraus einem folgenden Straßenfertiger zuführen. Beim Transportieren des zähflüssigen Einbauguts sind die Förderbänder des Beschickers hohen mechanischen und thermischen Belastungen ausgesetzt. Von Beschickerfahrzeugen wird erwartet, dass sie das zu fördernde Einbaugut auf einer bestimmten Höhe dem Straßenfertiger zuschütten. Daher sind die Förderbänder der Beschicker höhenverstellbar angeordnet. Meistens können die Förderbänder um eine Schwenkachse, die sich durch eine Umlenkrolle erstreckt, höhenverstellbar geschwenkt werden, damit am Abwurfort eine gewünschte Abwurfhöhe entsteht. Allerdings hat sich in der Praxis herausgestellt, dass eine Schrägstellung des Förderbandes nur begrenzt möglich ist, um eine erwünschte Abwurfhöhe zu erreichen. Dies liegt daran, dass bei einer zu steilen Stellung des Förderbandes der Förderwirkungsgrad negativ beeinflusst wird. So ist es möglich, dass bei einer zu steilen Stellung Einbaugut nach hinten abrutscht und nicht,in die gewünschte Richtung gefördert wird. Außerdem kann das Förderband bei einer zu steilen Stellung nicht mehr mit allen Geschwindigkeitsstufen betrieben werden.

Die EP 0 957 205 B1 beschreibt einen Straßenfertiger beziehungsweise ein Beschickersystem. Dabei fährt ein Straßenfertiger, der gleichzeitig als Beschicker ausgebildet ist, einem anderen Straßenfertiger voraus. Über eine Fördereinrichtung, die aus zwei Förderbändern besteht, kann bituminöses Einbaugut mit einem ersten Förderband einer Einbaubohle des ersten Straßenfertigers zugeführt werden beziehungsweise mit einem zweiten Förderband dem nachfahrenden Straßenfertiger zugeschüttet werden. Um das zähflüssige Einbaugut dem nachfahrenden Straßenfertiger auf einer bestimmten Höhe zuzuführen, ist das zweite Förderband des ersten Straßenfertigers beziehungsweise Beschickers höhenverstellbar angeordnet. Zur Einstellbarkeit der Abwurfhöhe des höhenverstellbaren Förderbandes ist das Förderband um eine Achse einer vorderen Umlenkrolle schwenkbar am Chassis aufgehängt.

Die DE 298 12 115 U1 betrifft ein Übergabegerät zum Befördern von gebundenen und ungebundenen Baustoffen in Einbaugeräte, vorzugsweise zum Befördern von Mischgut in Einbaugeräte für Asphaltschichten. Das Übergabegerät umfasst eine Fördereinrichtung, die aus zwei Förderbändern besteht, wobei ein Band des Übergabegeräts als Schwenkband ausgebildet ist und in seiner Höhe verstellbar ist, um verschiedene Förderhöhen zu realisieren. Die Höhenverstellung des Bandes erfolgt zwischen 15° und 25° zur Horizontalen. Schwenkbewegungen der Förderbänder sind hydraulisch stufenlos verstellbar und lassen sich gut dosierbar regeln. Es ist auch möglich, die Schwenkbewegung über andere Einrichtungen wie Seilzüge, Zahnstangen oder mechanische Getriebe zu betätigen. Allerdings muss beim Schwenken beziehungsweise bei der Höhenverstellung der Förderbänder darauf geachtet werden, dass eine zu steile Stellung den Förderwirkungsgrad der Förderbänder negativ beeinflusst.

Der Erfindung liegt die Aufgabe zugrunde, ein Beschickersystem zur Verfügung zu stellen, welches unter Verwendung einfacher konstruktiver Mittel eine erwünschte Abwurfhöhe erreicht, ohne dabei den Förderwirkungsgrad negativ zu beeinflussen.

Diese Aufgabe wird gelöst mit den technischen Merkmalen des Anspruchs 1. Verbesserte Weiterbildungen sind durch die technischen Merkmale der Unteransprüche gegeben.

Die Erfindung beschreibt eine Schwenkbandaufhängung, die zum Anbau an einem Beschicker geeignet ist. Durch den Anbau der Schwenkbandaufhängung kann eine vorgegebene Abwurfhöhe des Einbauguts erreicht werden.

Die Schwenkbandaufhängung wird am Fahrgestell des Beschickers befestigt. Erfindungsgemäß umfasst die Schwenkbandaufhängung einen Kragarm, der an dem Fahrgestell des Beschickers gelagert ist, einen Schwenkarm, der mit dem Kragarm schwenkbar verbunden ist, und ein Förderband, das mit dem Schwenkarm verbunden ist. Kennzeichnend für die Erfindung ist, dass die Schwenkbandaufhängung mindestens ein Hebeelement, wie Hydraulikzylinder, Seilzug, Zahnstange, Getriebe oder dergleichen umfasst, das mit einem ersten Ende am Fahrgestell und mit einem zweiten Ende am Kragarm befestigt ist, wobei der Kragarm durch das Hebeelement höhenverstellbar ist. Im folgenden wird das Hebeelement jeweils als Hydraulikzylinder bezeichnet.

Vorteilhaft ist, wenn sich die Reaktionskräfte des Förderbandes der Schwenkbandaufhängung über dem Kragarm direkt in das Fahrgestell des Beschickers einleiten lassen. Weil die Schwenkbandaufhängung nicht mit dem Fahrgestell des Förderbands des Beschickers verbunden ist, werden Schwingungseinflüsse des Beschickerförderbandes nicht auf das Förderband der Schwenkbandaufhängung übertragen. Bei der Schwenkbandaufhängung kann der Kragarm durch den Hydraulikzylinder in eine Arbeitsstellung höhenverstellt werden. Somit lässt sich die Abwurfhöhe des Einbauguts der Schwenkbandaufhängung direkt durch die Stellung des Kragarms beeinflussen. Alternativ kann zur Einstellung der Abwurfhöhe das Förderband der Schwenkbandaufhängung gekippt werden. Dabei ist zu beachten, dass bei einer zu steilen Stellung des Förderbandes ein geringerer Förderwirkungsgrad entsteht. Deshalb ist es vorteilhaft, wenn eine vorgeschriebene Abwurfhöhe zunächst mit einer Höhenverstellung des Kragarms angesteuert wird. Außerdem wird durch die Höhenverstellbarkeit des Kragarms eine maximale Durchfahrtshöhe in der Arbeitsstellung und eine maximale Transporthöhe in einer Transportstellung nicht überschritten.

Bei einer zweckmäßigen Ausführungsform ist der Hydraulikzylinder drehbar mit dem ersten Ende am Fahrgestell und mit dem zweiten Ende am Kragarm befestigt. Dadurch ist der Kragarm in seiner Höhenverstellung besonders flexibel einstellbar.

Vorzugsweise ist der Schwenkarm um eine Schwenkachse beweglich. Durch die Schwenkbarkeit des Schwenkarms zusammen mit dem Förderband können unterschiedliche Abwurforte für das Einbaugut bestimmt werden.

Vorzugsweise ist die Schwenkbandaufhängung in einer Transportstellung, wenn der Hydraulikzylinder eingefahren ist. Besonders im eingefahrenen Zustand bietet der Hydraulikzylinder eine stabile Halterung für den Kragarm. Es ist vorteilhaft, wenn bei ausbeziehungsweise eingefahrenem Hydraulikzylinder der Kragarm durch einen Bolzen gesichert ist.

Für einen sicheren Transport überragt die Schwenkbandaufhängung in der Transportstellung eine Transporthöhe von 3,10 m nicht. Damit können Brückendurchfahrten sicher durchquert werden.

Vorzugsweise ist der Kragarm um eine Schwenkachse beweglich gelagert. Der Kragarm kann um die Schwenkachse geschwenkt werden, um eine vorgeschriebene Abwurfhöhe für das Förderband der Schwenkbandaufhängung einzustellen.

Bei einer zweckmäßigen Ausführungsform ist der Kragarm aus der Transportposition schwenkbar um die Schwenkachse gelagert. Dadurch kann die Abwurfhöhe beliebig variiert werden.

Vorteilhaft ist es, wenn das Förderband Schwenkpositionen mit einem Schwenkradius von bis zu 180° aufweist. Dadurch können mit der Schwenkbandaufhängung nicht nur die Abwurfhöhe, sondern auch der Abwurfort variiert werden.

In einer weiteren vorteilhaften Ausführung umfasst der Schwenkarm einen ersten Abschnitt und einen zweiten Abschnitt, wobei die beiden Abschnitte fest miteinander verbunden sind. Durch den ersten Abschnitt wird der Schwenkarm schwenkbar mit dem Kragarm verbunden und mit dem zweiten Abschnitt kann das Förderband der Schwenkbandaufhängung stabil gelagert werden.

Eine stabile Befestigung der Schwenkbandaufhängung an dem Beschickerfahrgestell kann unterstützt werden, wenn der Kragarm Verstrebungen umfasst. Druck- und Zugkräfte können durch die Verstrebungen Wirkungsvoll absorbiert werden.

Bei einer zweckmäßigen Ausführungsform umfasst das Förderband der Schwenkbandaufhängung einen Aufnahmeabschnitt, der unter den Kragarm ragt oder dazu versetzt ist. Dadurch werden die auf den Kragarm wirkenden Drehmomente reduziert, wodurch der Kragarm entlastet wird. Vorteilhaft ist es auch, wenn die Schwenkachse des Schwenkarms durch den Aufnahmeabschnitt verläuft. Dadurch wird beim Schwenken eine mechanische Entlastung des Schwenkarms und des Kragarms erreicht. Vorzugsweise kann in der Praxis auf den Aufnahmeabschnitt des Förderbandes bei jeder Schwenkposition Beschickergut fallen, wobei das Förderband auch während des Schwenkens Beschickergut aufnehmen und fördern kann. Vorstellbar ist, dass dadurch mehrere nachfahrende Straßenfertiger mit Einbaugut der Schwenkbandaufhängung beschickt werden. Eine parallel versetzte Fahrt von Straßenfertiger und Beschickerfahrzeug ist dadurch auch möglich.

In einer weiteren Ausführungsform umfasst die Schwenkbandaufhängung ein Spannelement, das zwischen dem Schwenkarm und dem Förderarm gespannt ist. Als Spannelement vorstellbar sind zum Beispiel Ketten beziehungsweise Seile mit oder ohne zusätzlichem Hydraulikzylinder. Vorteilhaft ist, wenn das Spannelement an einem oberen Ende des ersten Abschnitts des Schwenkarms befestigt ist. Außerdem kann durch das Spannelement das Förderband der Schwenkbandaufhängung um eine Schwenkachse, bei einer ersten Umlenkrolle geschwenkt werden und somit die Abwurfhöhe variiert werden.

Für einen kompakten Anbau der Schwenkbandaufhängung an dem Fahrgestell eines Beschickers kann gesorgt werden, wenn der Kragarm und der Hydraulikzylinder innerhalb des Fahrgestells des Beschickers angeordnet sind.

In einem ausgefahrenen Zustand des Hydraulikzylinders kann der Kragarm über eine Höhe von 3,10 m hinausgehoben werden.

Die Schwenkbandaufhängung kann modulartig an Beschickerfahrzeugen befestigt werden. Dadurch ist es möglich, die Schwenkbandaufhängung schnell und einfach am Beschickerfahrzeug an- beziehungsweise abzubauen.

Bei einer zweckmäßigen Ausführungsform kann während eines Anhebens des Kragarms das Förderband in seiner Neigung geändert werden. Beispielsweise wird das Förderband gesenkt, wenn der Kragarm durch den Hydraulikzylinder angehoben wird.

Ausführungsformen des Erfindungsgegenstandes werden anhand der Zeichnungen erläutert. Es zeigen:
- Figur 1: eine Arbeitsstellung der Schwenkbandaufhängung, wobei die Schwenkbandaufhängung an einem Beschicker befestigt ist,
- Figur 2: eine Transportstellung der Schwenkbandaufhängung zusammen mit einem Beschickerfahrzeug.

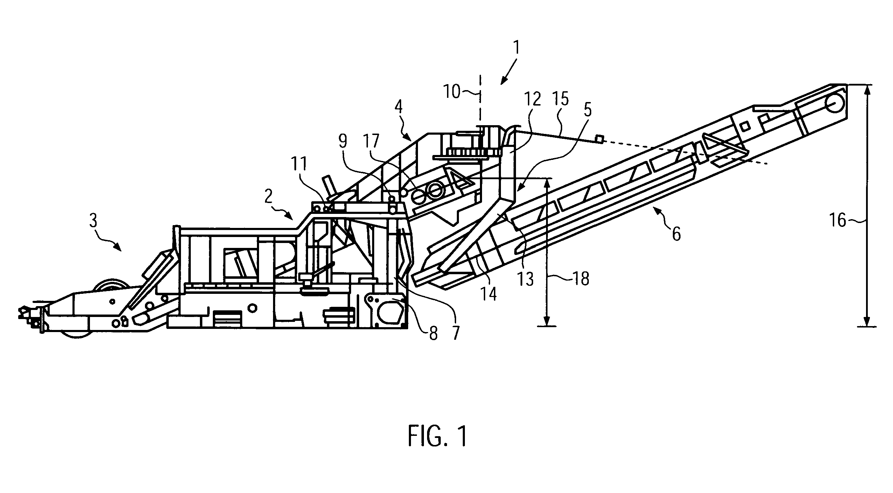

Die Figur 1 zeigt eine Schwenkbandaufhängung 1, die an einem Fahrgestell 2 eines Beschickers 3 befestigt ist. Die Schwenkbandaufhängung 1 umfasst einen Kragarm 4, der an dem Fahrgestell 2 des Beschickers 3 gelagert ist. Außerdem umfasst die Schwenkbandaufhängung 1 einen Schwenkarm 5, der mit dem Kragarm 4 schwenkbar verbunden ist. Ebenfalls zeigt die Figur 1 ein Förderband 6, das mit dem Schwenkarm 5 verbunden ist. Das Förderband 6 umfasst zwei Umlenkrollen und mehrere Führungsrollen, um ein Transportband zu führen. Das Transportband kann aus Gummi beziehungsweise aus einem Drahtgeflecht bestehen. Auf dem Transportband des Förderbandes 6 können Mitnahmeleisten befestigt sein. Diese eignen sich besonders gut, um das Einbaugut zu fördern.

Außerdem umfasst die Schwenkbandaufhängung 1 mindestens einen Hydraulikzylinder 7, der mit einem ersten Ende 8 am Fahrgestell 2 und mit einem zweiten Ende 9 am Kragarm 4 befestigt ist. Durch den Hydraulikzylinder 7 ist der Kragarm 4 höhenverstellbar.

Relativ zum Kragarm 4 ist der Schwenkarm 5 um eine Schwenkachse 10 beweglich gelagert.

Der Kragarm 4 ist um eine Schwenkachse 11, die innerhalb des Fahrgestells 2 des Beschickers 3 verläuft, beweglich gelagert.

Der Schwenkarm 5 besteht aus einem ersten Abschnitt 12 und aus einem zweiten Abschnitt 13, wobei beide Abschnitte 12, 13 fest miteinander verbunden sind. Beispielsweise können die beiden Abschnitte 12, 13 miteinander verschraubt werden beziehungsweise durch eine Schweißnaht verbunden sein. Alternativ ist der Schwenkarm 5 durchgehend ausgebildet, wobei die beiden Abschnitte 12, 13 durch einen Biegprozess herstellbar sind.

Das Förderband 6 umfasst einen Aufnahmeabschnitt 14. Der Aufnahmeabschnitt 14 erstreckt sich unterhalb des Kragarms 4 und wird von der Schwenkachse 10 durchquert. Selbst wenn das Förderband 6 um die Schwenkachse 10 geschwenkt wird, befindet sich der Aufnahmeabschnitt 14 unter dem Kragarm 4.

An dem Förderband 6 kann ein Spannelement 15 befestigt sein. Während das Spannelement 15 mit einem Ende am Fahrgestell des Förderbandes 6 befestigt ist, ist es mit seinem anderen Ende am ersten Abschnitt 12 des Schwenkarms 5 befestigt. Das Spannelement 15 kann beispielsweise ein Seil oder eine Kette mit oder ohne zusätzlichem Hydraulikzylinder sein. Durch das Spannelement 15 kann auch die Neigung des Förderbandes 6 eingestellt werden.

Durch die Schwenkbandaufhängung gemäß der Erfindung lässt sich eine erwünschte Abwurfhöhe 16 am Förderband 6 einstellen. Die Abwurfhöhe 16 kann entweder durch eine Höhenverstellung des Kragarms 4, oder durch ein Anstellen des Förderbandes 6 durch das Spannelement 15 eingestellt werden. Um eine gewisse Neigung des Förderbandes 6 beizubehalten, obwohl die Abwurfhöhe 16 geändert wird, kann während einer Höhenverstellung des Kragarms 4 gleichzeitig das Förderband 6 in seiner Neigung verstellt werden. Eine Berücksichtigung der Neigung des Förderbandes 6 ist wichtig, weil ab einer bestimmten Neigung der Förderwirkungsgrad negativ beeinflusst wird.

Während des Betriebs kann Einbaugut über eine Fördereinrichtung 17 bis auf eine bestimmte Abwurfhöhe 18 transportiert werden. Erreicht das Einbaugut auf der Fördereinrichtung 17 die Abwurfhöhe 18, fällt das Einbaugut auf den Aufnahmeabschnitt 14 des Förderbandes 6. Dabei kann sich das Förderband 6 in einer um die Schwenkachse 10 geschwenkten Position befinden.

Während das Einbaugut von der Fördereinrichtung 17 auf den Aufnahmeabschnitt 14 des Förderbandes 6 fällt, wirken große mechanische Kräfte über den Schwenkarm 5 auf den Kragarm 4. Um den Kragarm 4 nicht einer zu großen mechanischen Beanspruchung auszusetzen, ist der Aufnahmeabschnitt 14 des Förderbandes 6 unterhalb des Kragarms 4 angeordnet.

In der Figur 1 befindet sich die Schwenkbandaufhängung 1 in einer Arbeitsstellung. In der Arbeitsstellung kann der Kragarm 4 bis zu einer Höhe von 4 m ausfahren. Im ausgefahrenen Zustand kann eine maximale Abwurfhöhe 16 von 5 m erreicht werden.

Nachdem das Einbaugut von der Fördereinrichtung 17 auf den Aufnahmeabschnitt 14 des Förderbandes 6 gefallen ist, wird das Einbaugut zur Abwurfhöhe 16 transportiert. Von der Abwurfhöhe 16 kann ein nachfolgender Straßenfertiger mit Einbaugut beschickt werden. Um einen nachfolgenden Straßenfertiger gleichmäßig mit Einbaugut zu beschicken, kann das Förderband 6 innerhalb eines vorbestimmten Winkels hin- und hergeschwenkt werden. Damit wird erreicht, dass in einem Gutbunker des nachfolgenden Straßenfertigers das Einbaugut gleichmäßig eingeschüttet wird.

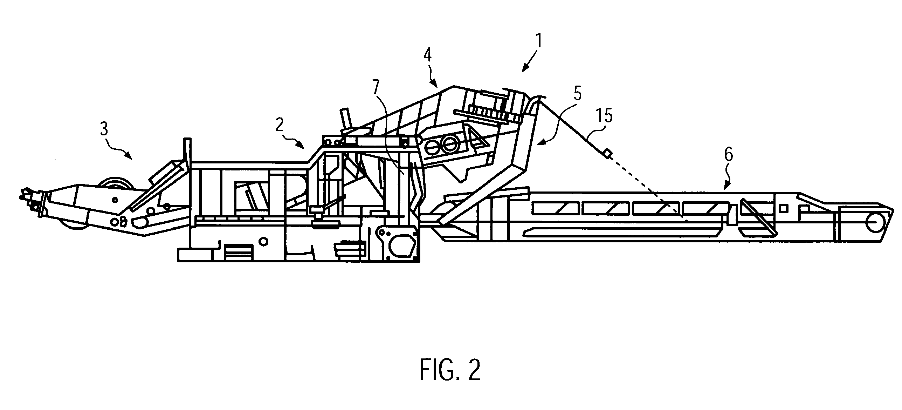

In der Figur 2 ist zu sehen, dass die Schwenkbandaufhängung 1 an einem Beschickerfahrzeug 3 befestigt ist, und sich in einer Transportstellung befindet. In der Transportstellung ist der Hydraulikzylinder 7 eingefahren. Der eingefahrene Hydraulikzylinder 7 bewirkt, dass der Kragarm 4 auf eine Transporthöhe gesenkt ist, wobei eine maximale Transporthöhe von 3,10 m nicht überschritten wird. Selbst in der Transportstellung ist der Aufnahmeabschnitt 14 des Förderbandes 6 unterhalb des Kragarms 4. Mit dem gesenkten Kragarm 4 ist auch das Förderband 6 in eine horizontale Transportstellung versetzt. In der horizontalen Lage kann das Förderband 6 durch das Spannelement 15 gehalten werden. Eine Förderung von Einbaugut ist auch in der Transportstellung möglich.

## Patentansprüche

1. Schwenkbandaufhängung (1) zum Befestigen an einem Fahrgestell (2) eines Beschickers (3), umfassend:
einen Kragarm (4), der zur Befestigung an dem Fahrgestell (2) des Beschickers (3) ausgebildet ist,
einen Schwenkarm (5), der mit dem Kragarm (4) schwenkbar verbunden ist, und
ein Förderband (6), das mit dem Schwenkarm (5) verbunden ist,
**gekennzeichnet durch**
mindestens ein Hebeelement (7), wie Hydraulikzylinder, Seilzug, Zahnstange, Getriebe oder dergleichen, das mit einem ersten Ende (8) am Fahrgestell (2) anbringbar und mit einem zweiten Ende (9) am Kragarm (4) befestigt ist, wobei der Kragarm (4) **durch** das Hebeelement (7) höhenverstellbar ist.

2. Schwenkbandaufhängung nach Anspruch 1, **dadurch gekennzeichnet, dass** das Hebeelement (7) drehbar mit dem ersten Ende (8) am Fahrgestell (2) anbringbar und mit dem zweiten Ende (9) am Kragarm (4) befestigt ist.

3. Schwenkbandaufhängung nach einem der Ansprüche 1 oder 2, **dadurch gekennzeichnet, dass** der Schwenkarm (5) um eine Schwenkachse (10) beweglich ist.

4. Schwenkbandaufhängung nach einem der Ansprüche 1 bis 3, **dadurch gekennzeichnet, dass** die Schwenkbandaufhängung (1) in einer Transportstellung ist, wenn das Hebeelement (7) eingefahren ist.

5. Schwenkbandaufhängung nach Anspruch 4, **dadurch gekennzeichnet, dass** die Schwenkbandaufhängung (1) in der Transportstellung eine Transporthöhe von 3,10 m nicht überragt.

6. Schwenkbandaufhängung nach einem der Ansprüche 1 bis 5, **dadurch gekennzeichnet, dass** der Kragarm (4) um eine Schwenkachse (11) beweglich gelagert ist.

7. Schwenkbandaufhängung nach Anspruch 6, **dadurch gekennzeichnet, dass** der Kragarm (4) aus der Transportposition schwenkbar um die Schwenkachse (11) gelagert ist.

8. Schwenkbandaufhängung nach einem der Ansprüche 1 bis 7, **dadurch gekennzeichnet, dass** das Förderband (6) Schwenkpositionen mit einem Schwenkradius von bis zu 180° aufweist.

9. Schwenkbandaufhängung nach einem der Ansprüche 1 bis 8, **dadurch gekennzeichnet, dass** der Schwenkarm (5) einen ersten Abschnitt (12) und einen zweiten Abschnitt (13) umfasst, wobei die beiden Abschnitte (12, 13) fest miteinander verbunden sind.

10. Schwenkbandaufhängung nach einem der Ansprüche 1 bis 9, **dadurch gekennzeichnet, dass** der Kragarm (4) Verstrebungen umfasst.

11. Schwenkbandaufhängung nach einem der Ansprüche 1 bis 10, **dadurch gekennzeichnet, dass** das Förderband (6) einen Aufnahmeabschnitt (14) umfasst, der unter den Kragarm (4) ragt oder dazu versetzt ist.

12. Schwenkbandaufhängung nach Anspruch 11, **dadurch gekennzeichnet, dass** auf den Aufnahmeabschnitt (14) des Förderbandes (6) bei jeder Schwenkposition Beschickergut fällt, wobei das Förderband (6) auch während des Schwenkens Beschickergut aufnimmt und fördert.

13. Schwenkbandaufhängung nach einem der Ansprüche 1 bis 12, **dadurch gekennzeichnet, dass** die Schwenkbandaufhängung (1) ein Spannelement (15) umfasst, das zwischen dem Schwenkarm (5) und dem Förderband (6) gespannt ist.

14. Beschicker mit einer Schwenkbandaufhängung (1) gemäß einem der Ansprüche 1 bis 13.

## Claims

1. Slewing belt mounting (1) to be fixed at a frame (2) of a charger (3), comprising:
a cantilever arm (4) designed to be fixed to the frame (2) of the charger (3),
a pivot arm (5) pivotally connected with the cantilever arm (4), and
a conveyor belt (6) connected to the pivot arm (5),
**characterized by**
at least one lifting element (7), such as a hydraulic cylinder, a cable winch, a toothed rack, a gear mechanism, or the like, which can be attached with a first end (8) to the frame (2) and which is attached with a second end (9) to the cantilever arm (4), the cantilever arm (4) being adjustable in height by the lifting element (7).

2. Slewing belt mounting according to claim 1, **characterized in that** the lifting element (7) may be rotatably fixed with the first end (8) at the frame (2) and is rotatably fixed with the second end (9) at the cantilever arm (4).

3. Slewing belt mounting according to one of claims 1 or 2, **characterized in that** the pivot arm (5) is movable about a pivot axis (10).

4. Slewing belt mounting according to one of claims 1 to 3, **characterized in that** the slewing belt mounting (1) is in a transport position when the lifting element (7) is retracted.

5. Slewing belt mounting according to claim 4, **characterized in that** the slewing belt mounting (1) does not exceed a transport height of 3.10 m in the transport position.

6. Slewing belt mounting according to one of claims 1 to 5, **characterized in that** the cantilever arm (4) is movably mounted about a pivot axis (11).

7. Slewing belt mounting according to claim 6, **characterized in that** the cantilever arm (4) is mounted to be pivotable from the transport position about the pivot axis (11).

8. Slewing belt mounting according to one of claims 1 to 7, **characterized in that** the conveyor belt (6) comprises pivot positions with a pivoting radius of up to 180°.

9. Slewing belt mounting according to one of claims 1 to 8, **characterized in that** the pivot arm (5) comprises a first section (12) and a second section (13), the two sections (12, 13) being firmly connected to each other.

10. Slewing belt mounting according to one of claims 1 to 9, **characterized in that** the cantilever (4) comprises struts.

11. Slewing belt mounting according to one of claims 1 to 10, **characterized in that** the conveyor belt (6) comprises a receiving portion (14) which projects under the cantilever arm (4) or is offset with respect to the latter.

12. Slewing belt mounting according to claim 11, **characterized in that** charger material falls onto the receiving portion (14) of the conveyor belt (6) in each pivot position, the conveyor belt (6) receiving and conveying charger material also during pivoting.

13. Slewing belt mounting according to one of claims 1 to 12, **characterized in that** the slewing belt mounting (1) comprises a tensioning element (15) which is tensioned between the pivot arm (5) and the conveyor belt (6).

14. Charger with a slewing belt mounting (1) according to one of claims 1 to 13.

## Revendications

1. Système de suspension (1) de convoyeur à bande oscillant ou pivotant, pour la fixation à un châssis de roulement (2) d'un alimentateur (3) comprenant :
un bras en porte-à-faux (4), qui est configuré pour être fixé au châssis de roulement (2) de l'alimentateur (3), un bras pivotant (5), qui est relié de manière pivotante au bras en porte-à-faux (4), et
un convoyeur à bande de transport (6), qui est relié au bras pivotant (5),
**caractérisé par**
au moins un élément de levage (7), comme un vérin hydraulique, un système de palan à câble, un système à crémaillère, un système de transmission ou similaire, qui, à une première extrémité (8), peut être attaché au châssis de roulement (2), et, à une deuxième extrémité (9), est fixé au bras en porte-à-faux (4), le bras en porte-à-faux (4) étant réglable en hauteur par l'élément de levage (7).

2. Système de suspension de convoyeur à bande oscillant ou pivotant selon la revendication 1, **caractérisé en ce que** l'élément de levage (7), à une première extrémité (8), peut être attaché de manière rotative au châssis de roulement (2), et, à une deuxième extrémité (9), est fixé de manière rotative au bras en porte-à-faux (4).

3. Système de suspension de convoyeur à bande oscillant ou pivotant selon l'une des revendications 1 ou 2, **caractérisé en ce que** le bras pivotant (5) est mobile autour d'un axe de pivotement (10).

4. Système de suspension de convoyeur à bande oscillant ou pivotant selon l'une des revendications 1 à 3, **caractérisé en ce que** le système de suspension (1) de convoyeur à bande oscillant ou pivotant est dans une position de transport lorsque l'élément de levage (7) est en position rétractée ou rentrée.

5. Système de suspension de convoyeur à bande oscillant ou pivotant selon la revendication 4, **caractérisé en ce que** le système de suspension (1) de convoyeur à bande oscillant ou pivotant ne dépasse pas, dans la position de transport, une hauteur de transport de 3,10 m.

6. Système de suspension de convoyeur à bande oscillant ou pivotant selon l'une des revendications 1 à 5, **caractérisé en ce que** le bras en porte-à-faux (4) est monté de manière mobile autour d'un axe de pivotement (11).

7. Système de suspension de convoyeur à bande oscillant ou pivotant selon la revendication 6, **caractérisé en ce que** le bras en porte-à-faux (4) est monté de manière à pouvoir pivoter autour de l'axe de pivotement (11) à partir de la position de transport.

8. Système de suspension de convoyeur à bande oscillant ou pivotant selon l'une des revendications 1 à 7, **caractérisé en ce que** le convoyeur à bande de transport (6) présente des positions de pivotement avec un rayon de pivotement pouvant aller jusqu'à 180°.

9. Système de suspension de convoyeur à bande oscillant ou pivotant selon l'une des revendications 1 à 8, **caractérisé en ce que** le bras pivotant (5) comprend un premier tronçon (12) et un deuxième tronçon (13), les deux tronçons (12, 13) étant reliés de manière fixe l'un à l'autre.

10. Système de suspension de convoyeur à bande oscillant ou pivotant selon l'une des revendications 1 à 9, **caractérisé en ce que** le bras en porte-à-faux (4) comporte des raidisseurs.

11. Système de suspension de convoyeur à bande oscillant ou pivotant selon l'une des revendications 1 à 10, **caractérisé en ce que** le convoyeur à bande de transport (6) comporte un tronçon de réception (14), qui fait saillie sous le bras en porte-à-faux (4) ou est décalé par rapport celui-ci.

12. Système de suspension de convoyeur à bande oscillant ou pivotant selon la revendication 11, **caractérisé en ce que** du produit d'alimentation de l'alimentateur tombe sur le tronçon de réception (14) du convoyeur à bande de transport (6) dans chaque position de pivotement, le convoyeur à bande de transport (6) recevant et transportant du produit d'alimentation de l'alimentateur également pendant le pivotement.

13. Système de suspension de convoyeur à bande oscillant ou pivotant selon l'une des revendications 1 à 12, **caractérisé en ce que** le système de suspension (1) de convoyeur à bande oscillant ou pivotant comporte un élément tendeur (15), qui est tendu entre le bras pivotant (5) et le convoyeur à bande de transport (6).

14. Alimentateur comprenant un système de suspension de convoyeur à bande oscillant ou pivotant (1) selon l'une des revendications 1 à 13.
